(19) Europäisches Patentamt / European Patent Office / Office européen des brevets

(11) **EP 3 146 270 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(21) Anmeldenummer: **15724927.7**

(22) Anmeldetag: **18.05.2015**

(51) Int Cl.:
*F23R 7/00* (2006.01)    *F02K 7/02* (2006.01)
*F02K 7/06* (2006.01)    *F02K 1/08* (2006.01)
*F02B 71/06* (2006.01)    *F02K 9/58* (2006.01)
*F02K 9/44* (2006.01)    *F02K 9/52* (2006.01)

(86) Internationale Anmeldenummer:
**PCT/CH2015/000077**

(87) Internationale Veröffentlichungsnummer:
**WO 2015/176190 (26.11.2015 Gazette 2015/47)**

(54) **VORRICHTUNG UND VERFAHREN ZUM WIEDERHOLTEN ERZEUGEN VON EXPLOSIONEN ZUM ANTRIEB EINES LUFTFAHRZEUGES**

DEVICE AND METHOD FOR THE REPEATED GENERATION OF EXPLOSIONS TO PROPEL AN AIRCRAFT

APPAREIL ET PROCÉDÉ POUR GÉNÉRER DE FAÇON REPETITIVE DES EXPLOSIONS POUR LA PROPULSION D'UN AVION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2014 CH 776142014**

(43) Veröffentlichungstag der Anmeldung:
**29.03.2017 Patentblatt 2017/13**

(73) Patentinhaber: **Explo Engineering AG**
**5622 Waltenschwil (CH)**

(72) Erfinder: **RÜEGG, Hans**
**CH-5622 Waltenschwil (CH)**

(74) Vertreter: **Frei Patent Attorneys**
**Frei Patentanwaltsbüro AG**
**Postfach**
**8032 Zürich (CH)**

(56) Entgegenhaltungen:
**EP-A1- 1 482 162      US-A- 4 726 184**
**US-A- 5 797 260       US-A- 5 941 062**
**US-A1- 2008 098 711**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Vorrichtung und ein Verfahren zum wiederholten Erzeugen von Explosionen zur Schuberzeugung, insbesondere in Luftfahrzeugen.

Es sind Antriebsmaschinen bekannt, sog. Pulse Detonation Engines (PDE), bei denen anstelle einer kontinuierlichen Verbrennung unter konstantem Druck die Temperatur- und Drucksteigerung der isochoren Verbrennung unter konstantem Volumen, d.h. durch Explosionen, verwendet wird. Im Gegensatz zum Explosionsmotor, in welchem der erzeugte Druck direkt den Kolben antreibt, wird eine Maximierung der kinetischen Energie der ausströmenden Verbrennungsgase angestrebt. Es sollen also die bei der Explosion erzeugten Rauchgase zur Erzeugung von maximalem Schub auf Maximalgeschwindigkeit beschleunigt werden und für Antriebszwecke eingesetzt werden. Bekannt wurden die Holzwarth-Turbine sowie Pulsstrahltriebwerke welche mit hoher Frequenz mittels Explosionen Schub erzeugten.

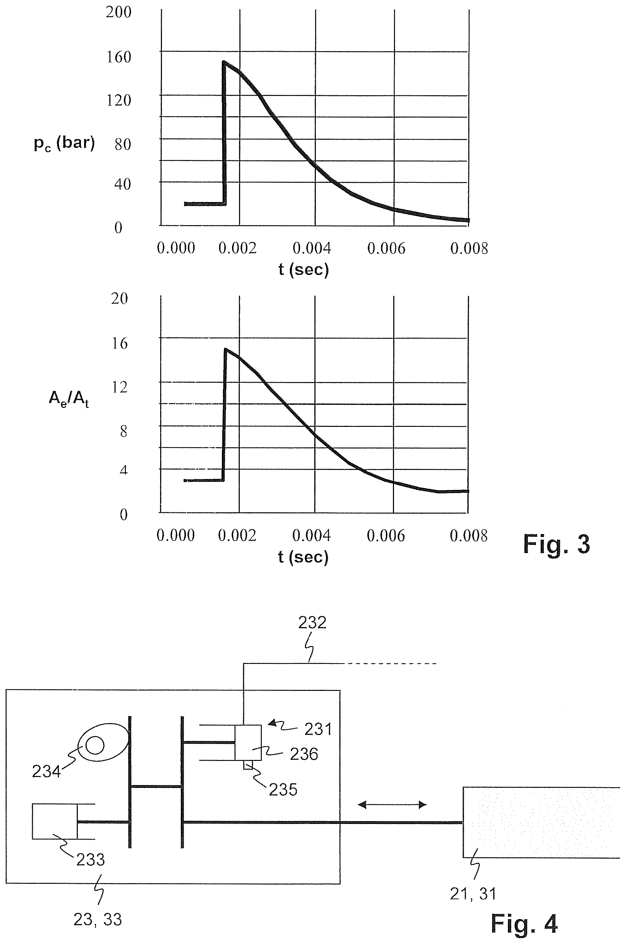

US 7'062'901 zeigt gemäss einer Ausführungsform (Fig. 4) eine einzelne Detonationskammer, und eine Düse mit einer flexiblen Seitenwand. Eine Austrittsfläche und/oder eine Eintrittsfläche der Düse sollen mittels einer Steuernocke variierbar sein. Ziel ist, optimale Expansion zu gewährleisten. Brauchbare Angaben zur Konstruktion einer solchen flexiblen Seitenwand liegen aber keine vor. Im Betrieb wird eine Explosionskammer unter atmosphärischem Druck mit einem explosiven Gas gefüllt und dieses gezündet. Es findet also keine Druckerhöhung vor der Zündung statt.

In der Europäischen Patentanmeldung EP 2 319 036 A2 (und ebenfalls US 2011/180020 A1) wird ein Verfahren zur Erzeugung von Druckimpulsen mittels Explosionen beschrieben. Dabei wird in einem durch ein Ventil verschlossenen Behälter eine Mischung aus Oxydationsmittel und Brennstoff gezündet und eine Explosion erzeugt. Das Ventil wird kurz vor der Zündung geöffnet und die Druckwelle der Explosion kann über die Austrittsöffnung an ihren Bestimmungsort geleitet werden. Das Gerät, auch Explosionsgenerator (EG) genannt, wird heute für die Reinigung von verschmutzten Dampfkesseln eingesetzt.

US 5,797,260 und die davon abgeleitete US 5,941,062 beschreiben einen pulsierenden Antrieb mit einem beweglichen Kolben. Durch den Druck eines zugeführten Brennstoffes wird der Kolben in Richtung einer Düse bewegt, es öffnet sich dadurch eine Zuführung zu einer Injektionskammer, die durch den Kolben von einer Brennkammer abgetrennt ist. Durch Injektionskanäle im Kolben und ein katalytisches Bett wird der Brennstoff katalytisch umgeformt, gelangt in die Brennkammer und entzündet sich. Durch die entstehende Explosion wird der Kolben von der Düse weg zurück bewegt. Dadurch wird verstärkt Brennstoff durch die Injektionskanäle getrieben, insbesondere nachdem die Zuführung wieder verschlossen ist, wodurch der Druck in der Brennkammer stark ansteigt. Nach dem Absinken des Drucks in der Brennkammer kann sich der Zyklus wiederholen. Gemäss einer Ausführungsform (Fig. 7) kann ein Vorsprung des Kolbens den Düsenhals mehr oder weniger stark verschliessen. Dadurch könne der Betrieb des Antriebs optimiert werden, wozu aber keine weiteren Angaben gemacht werden.

US 2008/098711 A1 zeigt einen Raketenmotor mit einem Verbrennungsprozess mit konstantem Volumen im Pulsmodusbetrieb. Ein Auslassventil der Brennkammer wird geöffnet, wenn der Brennkammerdruck maximal ist.

Eine Aufgabe der Erfindung ist, eine Vorrichtung und ein Verfahren der eingangs genannten Art zu schaffen, welche eine verbesserte Umsetzung der bei der Explosion freigesetzten Energie in kinetische Energie des Rauchgases bewirken.

Diese Aufgabe lösen eine Vorrichtung und ein Verfahren mit den Merkmalen der entsprechenden unabhängigen Patentansprüche 1 und 10.

Die Vorrichtung dient zum wiederholten Erzeugen von Explosionen. Sie weist auf: einen Explosionsraum, eine Zufuhrleitung zum Zuführen eines fliessfähigen explosionsfähigen Materials, eine Ablassöffnung zum gerichteten Ablassen eines durch Zündung des explosionsfähigen Materials im Explosionsraum erzeugten Gasdrucks, und ein bewegliches Verschlusselement zum teilweisen oder gänzlichen Verschliessen der Ablassöffnung. Dabei weist die Vorrichtung eine Austrittsdüse mit einer Düseneintrittsfläche und einer Düsenaustrittsfläche auf, sowie eine Stelleinrichtung. Die Stelleinrichtung ist dazu ausgebildet, nach einem Öffnen der Ablassöffnung und einem Ausströmen von Explosionsgasen durch die Austrittsdüse ein Flächenverhältnis zwischen der Düseneintrittsfläche und der Düsenaustrittsfläche einzustellen, welches mindestens annähernd einem idealen Flächenverhältnis zur Erzeugung einer maximalen Austrittsgeschwindigkeit der Explosionsgase in Abhängigkeit des Drucks im Explosionsraum folgt.

Im Gegensatz zu bekannten pulsierenden Antrieben kann dank des mindestens teilweise verschliessbaren Explosionsraums ein Druck im Explosionsraum vor der Zündung erhöht werden. Der bei der Explosion entstehende Druck ist proportional zum Druck vor der Zündung. Somit entsteht durch den erhöhten Druck vor der Explosion en entsprechend höhere Druck nach der Explosion, und die Austrittsgeschwindigkeit der austretenden Explosionsgase kann um ein Vielfaches erhöht werden.

Die Erfindung realisiert eine Düse, insbesondere eine konvergent-divergente, welche gewährleistet, dass während der gesamten Ausströmzeit immer das optimale, ideale Flächenverhältnis zwischen Düsenende (Düsenaustrittsfläche) und Düsenhals (Düseneintrittsfläche) zumindest annähernd eingestellt wird.

Im Gegensatz zum bekannten Explosionsgenerator der Europäischen Patentanmeldung EP 2 319 036 A2 wird die Umsetzung der bei der Explosion frei werdenden Energie in kinetische Energie zumindest annähernd optimiert.

In die Explosionskammer wird ein fliessfähiger, explosionsfähiger Stoff oder ein fliessfähiges, explosionsfähiges Gemisch, welches durch Vermischung von vorzugsweise an sich nicht explosionsfähigen Komponenten gebildet wird, eingeführt. Die fliessfähigen Stoffe und/oder Stoffgemische sind beispielsweise gasförmig, flüssig, puderförmig, staubförmig oder pulverförmig oder eine Mischung von solchen Komponentenstoffen. Typischerweise ist eine Komponente ein Brennstroff und eine andere Komponente ein Oxydator. Beispielsweise besteht ein Gemisch aus zwei unter Druck stehenden Gasen. Es werden hier und im Folgenden sämtliche Varianten und mögliche Kombinationen von Stoffen und Gemischen vereinfacht fliessfähiges explosionsfähiges Material genannt, ohne dass dies als Einschränkung auf einen einzelnen Stoff oder auf ein bestimmtes Gemisch zu verstehen ist.

Bei isochorer Verbrennung unter konstantem Volumen werden höhere Verbrennungstemperaturen erreicht als bei der Verbrennung unter konstantem Druck. Bei explosiver Verbrennung wird zusätzlich eine enorme Drucksteigerung erzielt. Z.Bsp wird bei einer stöchiometrischen Verbrennung von Luft und Erdgas unter konstantem Volumen ein Druckanstieg um den Faktor 7.5 erzielt, d.h. bei einem Vordruck von 10 bar der Mischung beträgt der Spitzendruck im Explosionsraum ca. 75 bar. Bei solchen Anwendungen mit isochorer Verbrennung ist das Ziel, einen Gasstrahl zu erzeugen, der mit maximaler Geschwindigkeit den Explosionsraum verlässt.

Dies ist aber bei überkritischen Überschalldüsen mit einer fixen Düsengeometrie nur für einen ganz bestimmten Druck möglich: Durch das Ausströmen der Explosionsgase aus dem Explosionsraum sinkt jedoch der Druck im Explosionsraum infolge adiabatischer Entspannung und sinkender Dichte. An der engsten Stelle wird dabei höchstens die kritische Schallgeschwindigkeit erreicht.

Soll eine geordnete Umsetzung der Wärmeenergie in Strömungsenergie erreicht werden, so kann eine konvergent-divergente Düse (Lavaldüse) verwendet werden. Dabei wird entlang eines Stromfadens die Strömungsgeschwindigkeit von Unterschall im Explosionsraum auf Schallgeschwindigkeit im engsten Querschnitt (dem Düsenhals) und auf Überschallgeschwindigkeit im divergenten Düsenteil beschleunigt. Im divergenten Düsenteil wird der Düsenquerschnitt kontinuierlich erweitert. Der Druck sinkt dabei ebenfalls kontinuierlich bis zum Düsenende. Die maximale Austrittsgeschwindigkeit erreicht die Strömung, wenn der Austrittsdruck = Umgebungsdruck ist. Das ideale Flächenverhältnis $\varepsilon = A_e/A_t$ zwischen Düsenende und Düsenhals berechnet sich gemäss der Formel

$$\varepsilon = \frac{A_e}{A_t} = \frac{\left(\frac{2}{\kappa+1}\right)^{\frac{1}{\kappa-1}}\left(\frac{p_c}{p_e}\right)^{\frac{1}{\kappa}}}{\sqrt{\frac{\kappa+1}{\kappa-1}\left(1-\left(\frac{p_e}{p_c}\right)^{\frac{\kappa-1}{\kappa}}\right)}}$$

Dabei ist $p_c$ der Brennkammerdruck im Explosionsraum oder Düseneintrittsdruck, $p_e$ der Druck am Düsenende oder Düsenaustrittsdruck, $A_e$ die Düsenaustrittsfläche, $A_t$ die Düseneintrittsfläche, und $\kappa$ der Isentropenexponent.

Da der Brennkammerdruck als Folge des Ausströmens der Verbrennungsgase sinkt, müsste auch das Flächenverhältnis E sinken. Durch die Explosion eines stöchiometrischen Gemisches von Luft und Wasserstoff unter beispielsweise 20 bar Vordruck bei 300 °K wird eine maximale Verbrennungstemperatur von ca 2400 °C und ein Explosionsdruck von ca 150 bar erreicht. Beim Ausströmen sinkt der Druck im Explosionsraum bis zum Druckausgleich mit der Umgebung. Um jederzeit während des Ausströmens immer die maximale Gasgeschwindigkeit am Düsenende zu erreichen, sollte das ideale Flächenverhältnis $\varepsilon$ deshalb idealerweise gemäss obiger Formel kontinuierlich von max. 15 auf ca 2 reduziert werden, dh das Düsenflächenverhältnis sollte idealerweise um den Faktor 7.5 variiert werden können.

**Figur 3** zeigt einen entsprechenden Zeitverlauf eines Drucks $p_c$ in einer Explosionskammer und eines daraus resultierenden idealen Flächenverhältnisses $\varepsilon = A_e/A_t$.

Es soll also die Düse, beispielsweise eine konvergent-divergente Düse, gewährleisten, dass während der gesamten Ausströmzeit zumindest annähernd das optimale, ideale Flächenverhältnis zwischen Düsenende und Düsenhals eingestellt wird.

Düsen üblicher Bauart, welche an Raketentriebwerken eingesetzt werden, haben eine fixe Geometrie. Da während des Betriebs die Leistung nicht verändert wird, ist es nicht notwendig, dass ihre Geometrie verstellt werden kann. Flugzeugtriebwerke mit Nachbrenner benötigen eine verstellbare Düse, da der engste Düsenquerschnitt bei Nachbrennerbetrieb vergrößert werden muss. Auch bei Gasturbinen sind verstellbare Düsen bekannt. Bei diesen Anwendungen werden die Düsen jeweils der Leistungsabgabe entsprechend verstellt aber dies immer relativ langsam, d.h. im Sekunden- bis Minutenbereich.

Im Gegensatz dazu benötigt das Ausströmen aus dem Explosionsvolumen eines Impuls- oder Explosionsgenerators höchstens ein paar Millisekunden, d.h. die Düsengeometrie muss der Ausströmgeschwindigkeit und Explosionsfrequenz entsprechend sehr schnell verstellt werden können. Angestrebt werden hohe spezifische Leistungen des Generators und um dies zu erreichen sind hohe Explosionsfrequenzen notwendig, d.h. es werden Frequenzen von bis zu 50 Hz angestrebt.

Der Schub F eines Triebwerks berechnet sich zu:

$$F = \dot{m} \cdot w_e + A_e \cdot (p_e - p_a)$$

wobei

$\dot{m}$ = Massenstrom im Düsenhals
$w_e$ = Düsenaustrittsgeschwindigkeit
$p_a$ = Umgebungsdruck

Eine zu kurze Düse mit zu kleinem Flächenverhältnis ε vergibt Energie, da nicht die maximale Austrittsgeschwindigkeit erreicht wird. Eine zu lange Düse mit zu grossem Flächenverhältnis ε führt zu Überexpansion und der Schub wird durch den Gegendruck gebremst. Prinzipiell gibt es bei gegebenen Brennkammer- und Umgebungsdrücken jeweils genau ein optimales Flächenverhältnis E.

In einer Ausführungsform wird diese Aufgabe gelöst durch eine ringförmige Düse mit einem rohrförmigen Aussenteil und einem konzentrischen, im wesentlichen kegelförmigen Innenteil, welche zueinander in axialer Richtung verstellbar sind. Ihre Kontur bildet jederzeit während des Ausströmens zumindest annähernd eine ideale Lavaldüse. Eine Aussengeometrie der Düse mit Hals- und Austrittsdurchmesser wird dabei vorzugsweise vorgängig festgelegt und für den maximal erreichbaren Schub ausgelegt. Der konzentrische Innenteil der Düse ist beweglich und verändert die Düsenhalsfläche oder Düseneintrittsfläche zumindest annähernd entsprechend dem idealen Flächenverhältnis.

Es gibt verschiedene konvergent-divergente Düsenformen. Gebräuchlich sind beispielsweise eine konische Düse und eine Glockendüse.

In einer Ausführungsform ist ein Regelventil zur Variation der Düseneintrittsfläche angeordnet, und ist die Stelleinrichtung ein Regelventilantrieb, welcher eine Bewegung des Regelventils zum Einstellen der Düseneintrittsfläche mindestens annähernd entsprechend dem genannten idealen Flächenverhältnis steuert.

Es wird dabei also das gewünschte Flächenverhältnis durch Variation der Düseneintrittsfläche erreicht.

Das Regelventil kann dabei mittels einer axialen Bewegung entlang einer Längsachse der Austrittsdüse bewegt werden. Die Austrittsdüse kann im wesentlichen rotationssymmetrisch geformt sein; eine Symmetrieachse dieser Rotationssymmetrie ist dabei gleich der Längsachse.

In einer Ausführungsform weist das Regelventil eine Regelventilnadel auf, und ist die Düseneintrittsfläche durch die Position der Regelventilnadel bezüglich der Ablassöffnung bestimmt.

In einer Ausführungsform weist die Regelventilnadel eine sich zu einer Ventilspitze hin verjüngende Aussenkontur auf, insbesondere eine zumindest annähernd kegelförmige Aussenkontur.

In einer Ausführungsform bilden das Regelventil und ein Ventilsitz einen konvergent-divergenten Teil der Austrittsdüse.

In einer Ausführungsform weist die Stelleinrichtung ein Antriebsmittel zum Antrieb einer Öffnungsbewegung des Regelventils auf, insbesondere indem das Antriebsmittel durch eine Hilfsexplosionsvorrichtung realisiert ist, in welcher eine Hilfsexplosion eine Kraft, welche die Öffnungsbewegung unterstützt, erzeugt.

Details zum Antrieb mit einer solchen Hilfsexplosionsvorrichtung sind in der eingangs erwähnten EP 2 319 036 A2 beschrieben. Insbesondere ist gemäss einer Ausführungsform möglich, die Explosion in der Hilfsexplosionsvorrichtung mit jener in der Explosionsraum mittels einer Leitung, auch Verzögerungsleitung genannt, zu synchronisieren.

Eine weitere Kraft oder Kraftkomponente, welche die Öffnungsbewegung unterstützt, kann durch den Rückstoss der ausströmenden Explosionsgase gegen das Regelventil entstehen.

In einer Ausführungsform weist die Stelleinrichtung ein Bremsmittel zum Verzögern einer Öffnungsbewegung des Regelventils auf, insbesondere indem das Bremsmittel durch eine Gasdruckfeder oder durch eine Nockenwelle oder durch eine Gasdruckfeder in Kombination mit einer Nockenwelle realisiert ist.

Antriebsmittel und Bremsmittel können auch durch eine einzige Vorrichtung realisiert sein, beispielsweise durch einen Kurbelantrieb.

Beim Einsatz einer Nockenwelle oder eines Kurbelantriebs kann ein Schwungrad zum Ausgleich einer Drehbewegung der Nockenwelle respektive des Kurbelantriebs vorliegen.

In einer Ausführungsform ist das Verschlusselement, dazu eingerichtet, die Ablassöffnung zeitweise gänzlich zu verschliessen. Damit ist es möglich, den Druck im Explosionsraum vor der Zündung über den Umgebungsdruck zu erhöhen.

In einer Ausführungsform wirkt das Regelventil als Verschlusselement zum teilweisen oder gänzlichen Verschliessen der Ablassöffnung. Damit ist eine einfache Konstruktion mit wenigen bewegten Teilen möglich.

In einer Ausführungsform liegt ein zusätzlich zum Regelventil wirkendes Schliessventil vor, welches als Verschlusselement zum teilweisen oder gänzlichen Verschliessen der Ablassöffnung wirkt. Damit kann das Regelventil vor Verschleiss geschützt werden.

Ein Schliessventilantrieb zum Antreiben und/oder Abbremsen des Schliessventils kann in gleicher Weise wie eine der beschriebenen Ausführungsformen für den Regelventilantrieb gestaltet sein.

Das Schliessventil kann dabei mittels einer axialen Bewegung entlang der Längsachse der Austrittsdüse bewegt werden.

In einer Ausführungsform sind das Regelventil und das Schliessventil konzentrisch zueinander angeordnet.

Das Schliessventil kann beispielsweise das Regelventil umschliessen und im Bereich der Ablassöffnung ein Ringventil bilden. Damit wird eine starke thermische und mechanische Beanspruchung durch das Schliessventil aufgenommen und nicht durch das Regelventil.

In anderen Ausführungsformen wird das Flächenverhältnis durch Variation der Düsenaustrittsfläche erreicht. Dies kann durch Variation der Form respektive der Kontur der Düse über die Zeit geschehen, synchron mit den wiederholten Explosionen.

In einer Ausführungsform geschieht dies durch Verschieben der Austrittsdüse oder eines Teiles der Austrittsdüse relativ zum Regelventil, insbesondere relativ zum sich verjüngenden Teil des Regelventils, also der Regelventilnadel. Es liegt dabei also vor: eine Vorrichtung gemäss mindestens einer der vorangehenden Ausführungsformen, wobei ein verstellbarer Düsenteil zur Variation der Düsenaustrittsfläche angeordnet ist, und eine Düsenverstelleinrichtung dazu eingerichtet ist, eine Bewegung des verstellbaren Düsenteils zum Einstellen der Düsenaustrittsfläche mindestens annähernd entsprechend dem genannten idealen Flächenverhältnis zu steuern. Insbesondere kann dabei der verstellbare Düsenteil in axialer Richtung relativ zum Regelventil verschoben werden.

Die Düsenverstelleinrichtung kann dabei in gleicher Weise wie eine der hier beschriebenen Ausführungsformen von Regelventilantrieben oder Schliessventilantrieben realisiert werden.

Falls auch die Düseneintrittsfläche variiert wird, ist die Änderung der Düseneintrittsfläche mit jener der Düsenaustrittsfläche koordiniert.

Das **Verfahren** zum wiederholten Erzeugen von Explosionen weist die wiederholte Ausführung der folgenden Schritte auf, insbesondere in der angegebenen Reihenfolge:

- Zuführen eines fliessfähigen explosionsfähigen Materials in einen Explosionsraum, wobei eine Ablassöffnung des Explosionsraums mittels eines beweglichen Verschlusselements zumindest teilweise verschlossen ist, und Erzeugen eines Überdrucks im Explosionsraum bezüglich eines Umgebungsdrucks;
- Öffnen der Ablassöffnung;
- Zünden des explosionsfähigen Materials im Explosionsraum;
- Abführen von Explosionsgasen durch die Ablassöffnung und eine Austrittsdüse;
- Einstellen eines Flächenverhältnisses zwischen der Düseneintrittsfläche und der Düsenaustrittsfläche der Austrittsdüse, welches mindestens annähernd einem idealen Flächenverhältnis zur Erzeugung einer maximalen Austrittsgeschwindigkeit der Explosionsgase in Abhängigkeit des sinkenden Drucks im Explosionsraum folgt;
- zumindest teilweises Verschliessen der Ablassöffnung mittels des beweglichen Verschlusselements.

In einer Ausführungsform findet der Schritt des Öffnens der Ablassöffnung vor dem Schritt des Zündens statt. Durch eine derart verzögerte Zündung wird eine thermische Beanspruchung des Ventilsitzes reduziert. Das Öffnen geschieht, je nach Ausführungsform, durch Öffnen des Regelventils oder des Schliessventils.

Die Verzögerung zwischen dem Öffnen der Ablassöffnung (beispielsweise durch eine Hilfsexplosion zum Antrieb des entsprechenden Ventils) und der Zündung im Explosionsraum liegt typischerweise im Bereich von Bruchteilen von Millisekunden bis wenigen Millisekunden, beispielsweise zwischen 0.1 und 10 Millisekunden, z.B. zwischen 0.5 und 1 Millisekunde.

In einer Ausführungsform geschieht das Zünden des explosionsfähigen Materials im Explosionsraum durch Leiten einer Explosion aus einer Hilfsexplosionvorrichtung durch eine Leitung zum Explosionsraum. Damit kann das folgende Problem vermieden werden: Bei Verwendung von Luft als Oxydator kann ein Übergang von einer Deflagration zur Detonation ("Deflagration-Detonation-Time", DDT) ziemlich lange dauern und ist abhängig von der Zündenergie. Bei einer direkten Zündung der Hauptexplosion mit einer Zündkerze könnte es dabei geschehen, dass in der Explosionskammer überhaupt keine Detonation mit starkem Druckanstieg erzeugt werden kann, oder dass die DDT zu lange dauert und ein Grossteil der Druckgase schon vor der Ausbildung der Hauptexplosion den Explosionsraum verlassen haben. Wird eine Hilfsexplosionvorrichtung mit beispielsweise einer Vorexplosionskammer verwendet, und die Explosion respektive Zündung mit einer Leitung (einem Rohr) der Zündung zum Explosionsraum übertragen, so ist die im Explosionsraum eingebrachte Energie um ein Vielfaches höher als bei der Zündkerze und es erfolgt zuverlässig eine Detonation. Die Hilfsexplosionsvorrichtung kann in der beschriebenen Weise nur zur Zündung im Explosionsraum eingesetzt werden, oder sie kann auch als Antrieb oder Teil des Antriebs des Regelventils oder des Schliessventils dienen.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:

Figur 1     eine Ausführungsform mit einem kombinierten Schliessventil und Regelventil;

Figur 2     eine Ausführungsform mit einem separaten Schliessventil und Regelventil;

Figur 3    Zeitverlauf eines Drucks in einer Explosionskammer und eines daraus resultierenden idealen Flächenverhältnisses; und

Figur 4    beispielhaft einen inneren Aufbau eines Regelventilantriebs oder Schliessventilantriebs.

Grundsätzlich sind in den Figuren gleiche oder gleich wirkende Teile mit gleichen Bezugszeichen versehen.

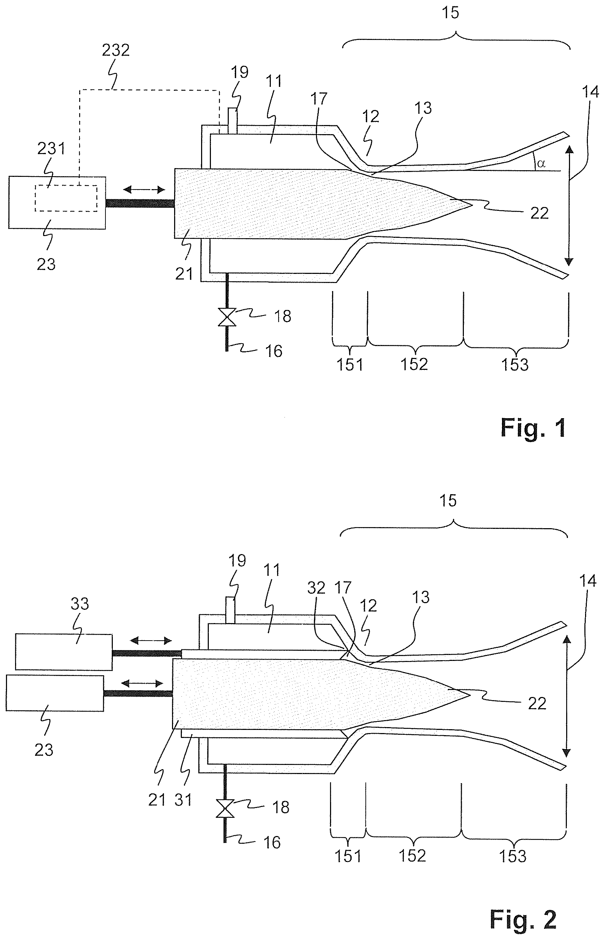

**Figur 1** zeigt eine Vorrichtung zum wiederholten Erzeugen von Explosionen: Ein Explosionsraum 11 ist über eine Zuführleitung 16 mit einem Füllventil 18 mit einem fliessfähigen explosionsfähigen Material befüllbar, beispielsweise einem explosiven Gasgemisch. Das Material kann mit einer Zündvorrichtung 19, beispielsweise einer Zündkerze, gezündet und zur Explosion gebracht werden. In einer anderen Ausführungsform wird das Material im Explosionsraum 11 über eine ebenfalls mit explosionsfähigem Material gefüllte Leitung oder Verzögerungsleitung 232 durch eine von einer Hilfsexplosionskammer einer Hilfsexplosionsvorrichtung 231 ausgehende und durch die Verzögerungsleitung 232 geführte Explosion gezündet.

Ein Austritt des Explosionsraums 11 führt durch eine Ablassöffnung 17 und eine Austrittsdüse 15. Die Austrittsdüse 15 ist eine Lavaldüse, mit einem konvergenten Düsenabschnitt 151, einem verstellbaren divergenten Düsenabschnitt 152 und einem fixen divergenten Düsenabschnitt 153. Die Verstellbarkeit des verstellbaren divergenten Düsenabschnitts 152 ist realisiert durch ein axial (also entlang einer Längsachse der Austrittsdüse 15) verstellbares Regelventil 21 mit einer Regelventilnadel 22. Die Regelventilnadel 22 ist im Bereich des verstellbaren divergenten Düsenabschnitts 152 angeordnet und ist sich verjüngend geformt, beispielsweise konisch. Dadurch nimmt die Düsenfläche im Bereich der Regelventilnadel 22 in Richtung der Düsenaustrittsfläche 14 hin zu, entsprechend der Abnahme eines Querschnittes der Regelventilnadel 22. In einem geschlossenen Zustand des Regelventils 21 verschliesst das Regelventil 21 an einem Ventilsitz 12 die Ablassöffnung 17 vollständig oder zumindest annähernd vollständig. Das Regelventil 21 kann somit auch als Schliessventil dienen.

Bei einer Bewegung der Regelventilnadel 22 von der Düsenaustrittsfläche 14 weg nimmt an jedem Ort des verstellbaren divergenten Düsenabschnitts 152 und im Bereich der Ablassöffnung 17 der Querschnitt der Düse über die Zeit zu. Insbesondere nimmt eine Düsenhalsfläche oder Düseneintrittsfläche 13 im Bereich der Ablassöffnung 17 über die Zeit zu.

Während des Füllens des Explosionsraums 11 mit einer explosionsfähigen Mischung aus Oxydator und Brennstoff dichtet das Regelventil 21 den Explosionsraum 11 gegen die Austrittsdüse 15 ab. Dadurch kann ein Überdruck erzeugt werden, mit dem wiederum ein hoher Explosionsdruck erzeugbar ist.

**Figur 2** zeigt eine Ausführungsform mit einem separaten Schliessventil 31 und Regelventil 21. Die übrigen Elemente sind dieselben wie bei der Figur 1. Diese Variante ist sinnvoll, wenn das Schliessventil 31 unabhängig vom Lavalventil oder Regelventil 21 sehr schnell bewegt werden soll. Dies ist insbesondere dann der Fall, wenn das Regelventil 21 mit Hilfe einer 231 Hilfsexplosionsvorrichtung angetrieben ist, beispielsweise wie in EP 2 319 036 A2 beschrieben. Das Schliessventil 31 kann separat vom Regelventil 21 bewegt werden. Ein Schliessventilantrieb 33 des Schliessventils 31 kann analog zu einem der möglichen Regelventilantriebe 23 ausgebildet sein. Die beiden Antriebe 23, 33 sind miteinander und mit einer Taktung der Explosionen im Explosionsraum 11 synchronisiert.

Das Schliessventil 31 verschliesst die Ablassöffnung 17 an einer Schliessventilringfläche 32.

Es kann mit dem Schliessventil 31 sichergestellt werden, dass durch ein schnelles Öffnen vor der Zündung der Hauptexplosion nur wenig Gas durch die Austrittsdüse 15 entweicht. Damit wird eine Schwierigkeit gelöst, die bei einem kombinierten Schliess.- und Regelventil auftritt: bei einem solchen sollte gemäss einer Variante des Betriebsverfahrens das Ventil zunächst ganz und dicht geschlossen sein, dann sollte es sehr schnell öffnen, bis die optimale Düseneintrittsfläche 13 bei der Explosion vorliegt, und dann durch Vergrössern der Düseneintrittsfläche 13 relativ langsam dem idealen Flächenverhältnis folgen, und zuletzt wieder schnell schliessen.

Durch die Trennung der Schliessfunktion von der Regelfunktion mittels des separaten Schliessventils 31 und die getrennte Bewegbarkeit der beiden Ventile kann beispielsweise das Regelventil 21 bei der Zündung schon etwas geöffnet sein, und muss nicht vorher besonders schnell bewegt werden und auf die langsamere Bewegung zum Folgen des Flächenverhältnisses abgebremst werden. Das Schliessventil 31 wiederum kann sehr schnell geöffnet werden, insbesondere durch Antrieb mittels einer Hilfsexplosion.

Der Antrieb des Regelventilantriebs 23 und oder des Schliessventilantriebs 33 kann durch irgendeine Kraft erfolgen, also beispielsweise pneumatisch, hydraulisch, durch einen Kurbelantrieb oder einen Nockenantrieb, oder mit einem (Hilfs-)Explosionsantrieb wie in EP 2 319 036 A2 beschrieben. Es können auch mehrere Antriebsprinzipien miteinander kombiniert werden, wie beispielhaft in **Figur 4** gezeigt: so kann ein (Hilfs-)Explosionsantrieb 231 mit einer Hilfs-Zündvorrichtung 235, beispielsweise einer Zündkerze, und einer Hilfsexplosionskammer 236 zum ersten Beschleunigen des Regelventils 21 bei der Öffnung eingesetzt werden (Mit der Verzögerungsleitung 232 wird die Explosion zum Explosionsraum 11 geführt). Dann kann ein Nockenantrieb oder eine Nockenwelle 234 oder ein Kurbelantrieb zum Bremsen und/oder zur Kontrolle der Geschwindigkeit des Regelventils 21 eingesetzt werden. Die Bewegung der Nockenwelle kann mit einem separaten Antrieb, beispielsweise elektrisch oder pneumatisch oder hydraulisch etc. gesteuert und/oder mit einem Schwungrad stabilisiert sein. Ferner kann eine Gasdruckfeder 233 zum Abbremsen der Bewegung des Regelventils 21 eingesetzt werden. Dabei können der Nockenantrieb 234 respektive der Kurbelantrieb mechanisch parallel (wie in der Figur gezeichnet) oder in Serie zur Gasdruckfeder 233 angeordnet sein.

Die Vorrichtung gemäss den Figuren 1 oder 2 kann folgendermassen betrieben werden:

1. Füllen des Explosionsraums 11 mit dem explosionsfähigen Material, beispielsweise einer Mischung aus einem Oxydator und einem Brennstoff. Das Regelventil 21 respektive das Schliessventil 31, falls vorhanden, ist in dieser Position geschlossen, eines oder mehrere Füllventile 18 sind geöffnet. Wird Luft als Oxydator verwendet, so kann diese aus dem Kompressor einer Gasturbine, einem Speicher oder einem sonstigen druckerzeugenden Aggregat stammen. Es ist auch denkbar, dass der Staudruck eines Flugzeugs die Luft verdichtet. Bei Verwendung von reinem Sauerstoff kann dieser aus einem Drucktank stammen.

2. Kurz vor Zündung der Explosion im Explosionsraum 11 werden das oder die Füllventile 18 geschlossen und kann das Regelventil 21 soweit geöffnet werden, dass das Flächenverhältnis ε zwischen Düsenende und Düsenhals einem idealen Flächenverhältnis beim Druck vor der Zündung entspricht.

3. Zündung des explosionsfähigen Materials. Das Schliessventil 31, falls vorhanden, wird geöffnet, ansonsten wird das Regelventil 21 geöffnet. Die hohe Explosionstemperatur kann es erforderlich machen, dass das entsprechende Ventil schon vor Zünden der Explosion etwas geöffnet ist. Das Ausströmen der Verbrennungsgase beginnt, und der Druck im Explosionsraum 11 sinkt. Nach dem Zünden wird durch einen Ventilweg, also durch Verschieben des Regelventils 21 in axialer Richtung bezüglich der Austrittsdüse 15, entsprechend einer Querschnittskontur respektive einer Kontur der Regelventilnadel 22 der Düsenhalsquerschnitt respektive die Düseneintrittsfläche 13 über die Zeit und mit dem abnehmenden Druck in der Explosionsraum 11 zumindest annähernd gemäss dem idealen Flächenverhältnis ε eingestellt. Die Verbrennungsgase werden im Düsenhals bis Schallgeschwindigkeit beschleunigt und anschliessend im divergenten Düsenteil weiter bis zur maximal erreichbaren Überschallgeschwindigkeit beschleunigt. Das Regelventil 21 wird kontinuierlich weiter geöffnet, bis die Düseneintrittsfläche 13 komplett frei gegeben ist und das minimale Flächenverhältnis ε erreicht ist und sich der Explosionsraum 11 weitgehend entleert hat.

4. Ist das Druck-Verhältnis von Umgebungsdruck und Brennkammerdruck im Gerät unter das kritische Druckverhältnis gesunken, wird das Regelventil 21 respektive das Schliessventil 31 geschlossen und die Vorrichtung ist bereit für den nächsten Takt.

## Patentansprüche

1. **Vorrichtung** zum wiederholten Erzeugen von Explosionen, aufweisend einen Explosionsraum (11), eine Zufuhrleitung zum Zuführen eines fliessfähigen explosionsfähigen Materials, eine Ablassöffnung zum gerichteten Ablassen eines durch Zündung des explosionsfähigen Materials im Explosionsraum (11) erzeugten Gasdrucks, und ein bewegliches Verschlusselement (21, 31) zum teilweisen oder gänzlichen Verschliessen der Ablassöffnung (17), wobei die Vorrichtung eine Austrittsdüse (15) mit einer Düseneintrittsfläche (13) und einer Düsenaustrittsfläche (14) aufweist,

    sowie eine Stelleinrichtung (23), welche dazu ausgebildet ist, nach einem Öffnen der Ablassöffnung (17) und einem Ausströmen von Explosionsgasen durch die Austrittsdüse (15) ein Flächenverhältnis zwischen der Düseneintrittsfläche (13) und der Düsenaustrittsfläche (14) einzustellen, welches mindestens annähernd einem idealen Flächenverhältnis zur Erzeugung einer maximalen Austrittsgeschwindigkeit der Explosionsgase in Abhängigkeit des Drucks im Explosionsraum (11) folgt,
    **dadurch gekennzeichnet, dass** ein Regelventil (21) zur Variation der Düseneintrittsfläche (13) angeordnet ist, und die Stelleinrichtung (23) ein Regelventilantrieb ist, welcher eine Bewegung des Regelventils (21) zum Einstellen der Düseneintrittsfläche (13) entsprechend dem genannten idealen Flächenverhältnis steuert,
    wobei das Regelventil (21) eine Regelventilnadel (22) aufweist, und die Düseneintrittsfläche (13) durch die Position der Regelventilnadel (22) bezüglich der Ablassöffnung (17) bestimmt ist.

2. Vorrichtung gemäss Anspruch 1, wobei die Regelventilnadel (22) eine sich zu einer Ventilspitze hin verjüngende Aussenkontur aufweist, insbesondere eine zumindest annähernd kegelförmige Aussenkontur.

3. Vorrichtung gemäss Anspruch 1 oder 2, wobei das Regelventil (21) und ein Ventilsitz (12) einen konvergent-divergenten Teil der Austrittsdüse (15) bilden.

4. Vorrichtung gemäss einem der Ansprüche 1 bis 3, wobei die Stelleinrichtung (23) ein Antriebsmittel zum Antrieb einer Öffnungsbewegung des Regelventils (21) aufweist, insbesondere indem das Antriebsmittel durch eine Hilfsexplosionsvorrichtung (231) realisiert ist, in welcher eine Hilfsexplosion eine Kraft, welche die Öffnungsbewegung unterstützt, erzeugt.

5. Vorrichtung gemäss einem der Ansprüche 1 bis 4, wobei die Stelleinrichtung (23) ein Bremsmittel zum Verzögern einer Öffnungsbewegung des Regelventils (21) aufweist, insbesondere indem das Bremsmittel durch eine Gasdruckfeder (232) oder durch eine Nockenwelle (233) oder durch eine Gasdruckfeder (232) in Kombination mit einer Nockenwelle (233) realisiert ist.

6. Vorrichtung gemäss einem der vorangehenden Ansprüche, in welcher das Verschlusselement (21, 31) dazu eingerichtet ist, die Ablassöffnung (17) zeitweise gänzlich zu verschliessen.

7. Vorrichtung gemäss einem der Ansprüche 1 bis 6, in welcher das Regelventil (21) als Verschlusselement zum teilweisen oder gänzlichen Verschliessen der Ablassöffnung (17) wirkt.

8. Vorrichtung gemäss einem der Ansprüche 1 bis 6, aufweisend ein zusätzlich zum Regelventil (21) wirkendes Schliessventil (31), welches als Verschlusselement zum teilweisen oder gänzlichen Verschliessen der Ablassöffnung (17) wirkt.

9. Vorrichtung gemäss Anspruch 8, wobei das Regelventil (21) und das Schliessventil (31) konzentrisch zueinander angeordnet sind.

10. **Verfahren** zum wiederholten Erzeugen von Explosionen, mit der wiederholten Ausführung der folgenden Schritte:

   • Zuführen eines fliessfähigen explosionsfähigen Materials in einen Explosionsraum (11), wobei eine Ablassöffnung (17) des Explosionsraums (11) mittels eines beweglichen Verschlusselements (21, 31) zumindest teilweise verschlossen ist, und Erzeugen eines Überdrucks im Explosionsraum (11) bezüglich eines Umgebungsdrucks;
   • Öffnen der Ablassöffnung (17);
   • Zünden des explosionsfähigen Materials im Explosionsraum (11);
   • Abführen von Explosionsgasen durch die Ablassöffnung (17) und eine Austrittsdüse (15);
   • Einstellen eines Flächenverhältnisses zwischen der Düseneintrittsfläche (13) und der Düsenaustrittsfläche (14) der Austrittsdüse (15), welches mindestens annähernd einem idealen Flächenverhältnis zur Erzeugung einer maximalen Austrittsgeschwindigkeit der Explosionsgase in Abhängigkeit des sinkenden Drucks im Explosionsraum (11) folgt; und
   • zumindest teilweises Verschliessen der Ablassöffnung (17) mittels des beweglichen Verschlusselements (21, 31);

**dadurch gekennzeichnet, dass** der Schritt des Einstellens des Flächenverhältnisses mittels eines Regelventils (21) erfolgt, welches eine Düseneintrittsfläche (13) der Austrittsdüse (15) variiert, wobei ein Regelventilantrieb eine Bewegung des Regelventils (21) zum Einstellen der Düseneintrittsfläche (13) entsprechend dem genannten idealen Flächenverhältnis steuert, wobei das Regelventil (21) eine Regelventilnadel (22) aufweist, und die Düseneintrittsfläche (13) durch die Position der Regelventilnadel (22) bezüglich der Ablassöffnung (17) bestimmt ist.

11. Verfahren gemäss Anspruch 10, wobei der Schritt des Öffnens der Ablassöffnung (17) vor dem Schritt des Zündens stattfindet.

12. Verfahren gemäss Anspruch 10 oder 11, wobei das Zünden des explosionsfähigen Materials im Explosionsraum (11) durch Leiten einer Explosion aus einer Hilfsexplosionsvorrichtung (235) durch eine Leitung (232) zum Explosionsraum (11) geschieht.

**Claims**

1. A **device** for the repeated production of explosions, comprising an explosion space (11), a feed conduit for feeding a flowable, explosive material, a discharge opening for the directed discharge of a gas pressure produced by the ignition of the explosive material in the explosion space (11), and a movable closure element (21, 31) for the partial or complete closure of the discharge opening (17),

   **characterised in that** the device comprises an exit nozzle (15) with a nozzle entry area (13) and a nozzle exit area (14), as well as an actuation device (23) which is designed, after an opening of the discharge opening (17) and an outflow of explosion gases through the exit nozzle (15), to adjust an area ratio between the nozzle entry area (13) and the nozzle exit area (14), said area ratio at least approximately following an ideal area ratio for the production of a maximal exit speed of the explosion gases, in dependence on the pressure in the explosion space (11) **characterised in that** a control valve (21) is arranged for the variation of the nozzle entry area (13), and the actuation device (23) is a control valve drive which controls a movement of the control valve (21) for adjusting the nozzle entry area (13) in accordance with the mentioned ideal area ratio,
wherein the control valve (21) comprises a control valve needle (22), and the nozzle entry area (13) is determined by the position of the control valve needle (2) with respect to the discharge opening (17).

**2.** The device according to claim 1, wherein the control valve needle (22) has an outer contour which tapers to a valve tip, in particular an at least approximate conical outer contour.

**3.** The device according to claim 1 or 2, wherein the control valve (21) and a valve seat (12) form a convergent-divergent part of the exit nozzle (15).

**4.** The device according to one of the claims 1 to 3, wherein the actuation device (23) comprises a drive means for the drive of an opening movement of the control valve (21), in particular by way of the drive means being realised by way of an auxiliary explosion device (231), in which an auxiliary explosion produces a force which assists the opening movement.

**5.** The device according to one of the claims 1 to 4, wherein the actuation device (23) comprises a braking means for the delay of an opening movement of the control valve (21), in particular by way of the braking means being realised by a gas pressure spring (232) or by a cam shaft (233) or by a gas pressure spring (232) in combination with a cam shaft (233).

**6.** The device according to one of the preceding claims, in which the closure element (21, 31) is configured to temporarily completely close the discharge opening (17).

**7.** The device according to one of the claims 1 to 6, in which the control valve (21) acts as a closure element for the partial or complete closure of the discharge opening (17).

**8.** The device according to one of the claims 1 to 6, comprising a closure valve (31) which acts additionally to the control valve (21) and which as a closure element acts for the partial or complete closure of the discharge opening (17).

**9.** The device according to claim 8, wherein the control valve (21) and the closure valve (31) are arranged concentrically to one another.

**10.** A **method** for the repeated production of explosions, with the repeated implementation of the following steps:

• feeding a flowable, explosive material into an explosion space (11), wherein a discharge opening (17) of the explosion space (11) is at least partly closed by way of a movable closure element (21, 31), and producing an overpressure in the explosion space (11) with respect to an ambient pressure;
• opening the discharge opening (17);
• igniting the explosive material in the explosion space (11);
• discharging explosion gases through the discharge opening (17) and an exit nozzle (15);
• adjusting an area ratio between the nozzle entry area (13) and the nozzle exit area (14), of the exit nozzle (15), said area ratio at least approximately following an ideal area ratio for the production of a maximal exit speed of the explosion gases, in dependence on the dropping pressure in the explosion space (11);
• at least partially closing the discharge opening (17) by way of the movable closure element (21, 31);

**characterised in that** the step of adjusting the area ratio is effected by way of a control valve (21) which varies a nozzle entry area (13) of the exit nozzle (15),

wherein a control valve drive controls a movement of the control valve (21) for adjusting the nozzle entry area (13) in accordance with the mentioned, ideal area ratio,
wherein the control valve (21) comprises a control valve needle (22), and the nozzle entry area (13) is determined by the position of the control valve needle (2) with respect to the discharge opening (17).

**11.** The method according to claim 10, wherein the step of the opening of the discharge opening (17) takes place before the step of the ignition.

**12.** The method according to claim 10 or 11, wherein the ignition of the explosive material in the explosion space (11) is effected by way of leading an explosion out of an auxiliary explosion device (235) through a conduit (232) to the explosion space (11).

**Revendications**

**1.** Ensemble pour former des explosions répétées, l'ensemble présentant

une chambre d'explosion (11),
un conduit d'amenée amenant un matériau explosif fluide,
une ouverture d'échappement qui permet un échappement orienté de la pression gazeuse formée dans la chambre d'explosion (11) par l'allumage du moyen explosif et

un élément mobile de fermeture (21, 31) qui ferme totalement ou partiellement l'ouverture d'échappement (17),

l'ensemble présentant

une tuyère de sortie (15) présentant une superficie d'entrée de tuyère (13) et une superficie de sortie de tuyère (14) ainsi que

un dispositif de réglage (23) configuré pour, après l'ouverture de l'ouverture d'échappement (17) et la sortie des gaz de l'explosion par la tuyère de sortie (15), établir entre la superficie d'entrée de tuyère (13) et la superficie de sortie de tuyère (14) un rapport de superficies qui suit au moins approximativement le rapport de superficies idéal qui permet d'obtenir la vitesse de sortie des gaz de l'explosion maximale compte tenu de la pression qui règne dans la chambre d'explosion (11),

**caractérisé en ce que**

une soupape de régulation (21) est disposée pour faire varier la superficie d'entrée de tuyère (13),

**en ce que** le dispositif de réglage (23) est un entraînement de soupape de régulation qui commande un déplacement de la soupape de régulation (21) tel qu'il établit une superficie d'entrée de tuyère (13) qui correspond audit rapport de superficies idéal,

**en ce que** la soupape de régulation (21) présente un pointeau (22) de soupape de régulation et

**en ce que** superficie d'entrée de tuyère (13) est définie par la position du pointeau (22) de soupape de régulation par rapport à l'ouverture d'échappement (17).

2. Ensemble selon la revendication 1, dans lequel le pointeau (22) de soupape de régulation présente un contour extérieur qui se rétrécit en direction de la pointe de la soupape et en particulier un contour extérieur au moins approximativement conique.

3. Ensemble selon les revendications 1 ou 2, dans lequel la soupape de régulation (21) et le siège (12) de la soupape forment une partie convergente-divergente de la tuyère de sortie (15).

4. Ensemble selon l'une des revendications 1 à 3, dans lequel le dispositif de réglage (23) présente un moyen d'entraînement qui entraîne le déplacement d'ouverture de la soupape de régulation (21), et en particulier dans lequel le moyen d'entraînement est réalisé sous la forme d'un ensemble (231) d'explosion auxiliaire dans lequel une explosion auxiliaire exerce une force qui soutient le déplacement d'ouverture.

5. Ensemble selon l'une des revendications 1 à 4, dans lequel le dispositif de réglage (23) présente un moyen de freinage qui ralentit le déplacement d'ouverture de la soupape de régulation (21), en particulier grâce au fait que le moyen de freinage est réalisé sous la forme d'un ressort (232) à pression de gaz, sous la forme d'un arbre à cames (233) ou sous la forme d'une combinaison d'un ressort (232) à pression de gaz et d'un arbre à cames (233).

6. Ensemble selon l'une des revendications précédentes, dans lequel l'élément mobile de fermeture (21, 31) est conçu pour fermer complètement l'ouverture d'échappement (17) à certains moments.

7. Ensemble selon l'une des revendications 1 à 6, dans lequel la soupape de régulation (21) agit comme élément de fermeture pour fermer partiellement ou totalement l'ouverture d'échappement (17).

8. Ensemble selon l'une des revendications 1 à 6, présentant une soupape de fermeture (31) agissant en plus de la soupape de régulation (21) comme élément de fermeture assurant la fermeture partielle ou totale de l'ouverture d'échappement (17).

9. Ensemble selon la revendication 8, dans lequel la soupape de régulation (21) et la soupape de fermeture (31) sont disposées concentriquement l'une par rapport à l'autre.

10. Procédé pour former des explosions répétées en exécutant de manière répétée les étapes suivantes :

- amener un moyen explosif fluide dans une chambre d'explosion (11), l'ouverture d'échappement (17) de la chambre d'explosion (11) étant fermée au moins partiellement au moyen d'un élément mobile de fermeture (21, 31), et former dans la chambre d'explosion (11) une pression plus élevée que la pression de l'environnement,
- ouvrir l'ouverture d'échappement (17),
- allumer le moyen explosif dans la chambre d'explosion (11),
- évacuer les gaz de l'explosion par l'ouverture d'échappement (17) et une tuyère de sortie (15),
- établir entre la superficie d'entrée de tuyère (13) et la superficie de sortie de tuyère (14) de la tuyère de sortie (15) un rapport de superficies qui suit au moins approximativement le rapport de superficies idéal qui permet de former la vitesse de sortie des gaz de l'explosion qui est maximale compte tenu de la pression décroissante qui règne dans la chambre d'explosion (11) et

- fermer au moins partiellement l'ouverture d'échappement (17) au moyen de l'élément mobile de fermeture (21, 31),

**caractérisé en ce que**

l'étape d'établissement du rapport de superficies s'effectue au moyen d'un soupape de régulation (21) qui fait varier la superficie d'entrée de tuyère (13) de la tuyère de sortie (15), **en ce qu'**un entraînement de soupape de régulation commande un déplacement de la soupape de régulation (21) tel qu'il établit une superficie d'entrée de tuyère (13) qui correspond audit rapport de superficies idéal, **en ce que** la soupape de régulation (21) présente un pointeau (22) de soupape de régulation et **en ce que** la superficie d'entrée de tuyère (13) est définie par la position du pointeau (22) de soupape de régulation par rapport à l'ouverture d'échappement (17).

11. Procédé selon la revendication 10, dans lequel l'étape d'ouverture de l'ouverture d'échappement (17) a lieu avant l'étape d'allumage.

12. Procédé selon les revendications 10 ou 11, dans lequel l'allumage du moyen explosif dans la chambre d'explosion (11) s'effectue en conduisant une explosion depuis un ensemble (231) d'explosion auxiliaire à la chambre d'explosion (11) par un conduit (232).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2319036 A2
- US 2011180020 A1
- US 5797260 A
- US 5941062 A
- US 2008098711 A1